# EUROPÄISCHE PATENTSCHRIFT

(11) **EP 0 582 915 B1**
(45) Veröffentlichungstag und Bekanntmachung des Hinweises auf die Patenterteilung: **27.10.1999**
(21) Anmeldenummer: 93112257.6
(22) Anmeldetag: 30.07.1993
(51) Int. Cl.: A01N 37/02

(54) **Insektenbekämpfungsverfahren und Insektenbekämpfungsmittel**
Method and agent for the control of insects
Agent et procédé de lutte contre les insectes

(30) Priorität: 12.08.1992 DE 4226674
(43) Veröffentlichungstag der Anmeldung: 16.02.1994
(73) Patentinhaber: BAYER AG, 51368 Leverkusen (DE)
(72) Erfinder: Bertram, Heinz-Jürgen, Dr., D-37603 Holzminden (DE); Lenz, Jürgen Georg, Dr., D-51061 Köln (DE); Krüger, Bernd-Wieland, Dr., D-51467 Bergisch Gladbach (DE); Nentwig, Günther, Dr., D-51061 Köln (DE)

(56) Entgegenhaltungen:
- EP-A- 0 229 191
- WO-A-89/12389
- CH-A- 666 789
- DE-A- 2 733 033
- US-A- 4 152 422
- JOURNAL OF CHEMICAL ECOLOGY Bd. 10, Nr. 2 , 1984 , NEW YORK, US Seiten 349 - 360 M.S.MULLA ET AL. 'Field Evaluation of Chemical Attractants against the Fly Fannia Femoralis (Diptera: Muscidae)'
- JOURNAL OF ECONOMIC ENTOMOLOGY Bd. 70, Nr. 4 , 15. August 1977 , COLLEGE PARK, MARYLAND US Seiten 644 - 648 M.S.MULLA ET AL. 'Attractants for Synanthropic Flies: Chemical Attractants for Domestic Flies'
- W.PERKOW 'Die Insektizide' 1968 , HüTHIG , HEIDELBERG, DE Seiten 541-544, 'Lockstoffe' * Seite 542, Absatz 3 *

## Beschreibung

Die vorliegende Erfindung betrifft die neue Verwendung von n-Buttersäure und Muscalure in Mischung mit weiteren Stoffen als ein Lockmittel bei der Bekämpfung von Muscidae sowie Fliegenbekämpfungsvorrichtungen und Mittel, die n-Buttersäure und Muscalure in Mischung mit weiteren Stoffen als ein Lockmittel für Muscidae enthalten.

Die Bekämpfung von Insekten, insbesondere Insekten, die sich in Haushalten, Lebensmittel-verarbeitenden Betrieben, Großküchen und Krankenhäusern, aber auch in Viehstallungen aufhalten, ist aus hygienischen und ästhetischen Gesichtsgründen von großer Bedeutung. Die Effizienz von mechanischen, biologischen und chemischen Bekämpfungsverfahren kann dadurch erheblich gesteigert werden, daß die zu bekämpfenden Insekten durch geeignete Lockmittel wie Köder, bestimmte Farbanordnungen usw., zu den Bekämpfungsvorrichtungen bzw. den insektiziden Mitteln gelockert werden.

Es wurde nun gefunden, daß man eine Mischung von n-Buttersäure (CH₃-CH₂-CH₂-COOH) und Muscalure mit wenigstens einem der folgenden Stoffe
(a) Caprylsäure (CH₃-(CH₂)₆-COOH) und/oder
(b) Diacetyl (CH₃-CO-CO-CH₃) und/oder
(c) Laurinsäure (CH₃-(CH₂)₁₀-COOH)
als ein Lockmittel bei der Bekämpfung von Muscidae verwenden kann.

Aus der US-Patentschrift Nr. 4 988 507 ist es bekannt, Mischungen aus "marigold" (Extrakt aus Calendula Officinalis) und Isobuttersäure sowie Mischungen aus Isobuttersäure und Isoamyldecanoat (und gegebenenfalls zusätzlich "marigold") als Lockmittel für Musca domestica zu verwenden.

In J. Chem. Ecology (1984) Bd. 10, Nr. 2, Seite 349 wird ein synthetischer Fliegenlockstoff auf Sardellfleischbasis beschrieben, der zusätzlich Trimethylaminhydrochlorid, Indol, Ammoniumsulfat und n-Buttersäure enthält.

J. Economic Entomology (1977) Bd. 70, Nr. 4, Seite 644 beschreibt ebenfalls einen synthetischen Fliegenlockstoff auf Basis von Trimethylaminhydrochlorid, Indol, Linolsäure und Ammoniumchlorid.

In der EP 229 191 wird eine Fliegen-lockende Zusammenstellung einer bestimmten gelbroten Farbe beschrieben, die u.a. Muscalure enthält. Als weiterer Lockstoff wird ganz allgemein Buttersäure aufgelistet.

Die Patentschrift CH 666 789 beschreibt ein Gerät zum Anlocken und Vernichten von Insekten, insbesondere Moskitos. Als Lockstoff dient neben Licht- und Wärmestrahlung allgemein Buttersäure.

In WO 89/12389 wird ein Insektenvernichtungsgerät beschrieben, das Insekten u.a. mit Buttersäure oder deren Ester anlockt und diese durch elektrische Ladung tötet.

DE 2 733 033 beschreibt einen Insektenfänger, der mit (Z)-9-Tricosen oder ein Gemisch dessen mit (Z)-9-Heneicosen Hausfliegen anlockt.

In Parkow, Die Insektizide (1968) Seite 541 ff wird u.a. Diacetyl als synthetischer Lockstoff beschrieben und die US 4 152 422 beschreibt eine Methode zum Anlocken männlicher Mittelmeerfruchtfliegen mit (E)-6-nonenoat allein oder in Kombination mit (E)-6-nonen-1-ol und Gemischen von Fettsäuren, u.a. Caprylsäure und Laurinsäure.

Es war jedoch überraschend und durch den Stand der Technik nicht nahegelegt, daß n-Buttersäure und Muscalure in Mischung mit einem oder mehreren der unter (a) bis (c) aufgeführten Stoffe eine starke Lockwirkung auf Muscidae ausübt, die bei der Bekämpfung der Insekten dadurch genutzt werden kann, daß die Insekten zu den mechanischen bzw. physikalischen Insektenbekämpfungsvorrichtungen und Mitteln oder zu den biologischen und chemischen Insektenbekämpfungsmitteln gelockt werden, wo sie abgetötet werden können.

Die vorliegende Erfindung betrifft somit auch die Verwendung von Mischungen von n-Buttersäure und Muscalure mit den Komponenten (a) und/oder (b) und/oder (c) bei der Bekämpfung von Muscidae mit mechanischen Insektenbekämpfungsvorrichtungen oder Mitteln sowie mit biologischen und/oder vorzugsweise chemischen Insektenbekämpfungsmitteln und mit Kombinationen solcher Mittel.

Wie bereits oben dargelegt wurde, kann n-Buttersäure und Muscalure in Mischung mit den Komponenten (a) bis (c) verwendet werden. Der Fachmann kann je nach Verwendung und je nach Verfügbarkeit der Stoffe eine geeignete Wahl der Komponente leicht treffen.

Die Mischungsverhältnisse können in weiten Bereichen schwanken, ohne daß ein merklicher Wirkungsverlust auftritt. Die n-Buttersäure sollte jedoch wenigstens in einer Menge von 5 Gew.-% (Gewichtsprozente) in der Mischung enthalten sein. Vorzugsweise enthalten die Mischungen 5 bis 95, besonders bevorzugt 5 bis 80 Gew.-% Buttersäure. Die Komponenten (b) und/oder (c) sind in den Mischungen vorzugsweise in Mengen von 5 bis 90 Gew.-%, insbesondere 15 bis 80 Gew.-% enthalten. Muscalure ist in den Mischungen vorzugsweise in Mengen von 5 bis 90 Gew.-%, insbesondere 15 bis 80 Gew.-% enthalten.

Die erfindungsgemäß verwendbaren Lockmittel können in vorteilhafter Weise dazu verwendet werden, zu bekämpfende Muscidae an bestimmte Orte zu locken, wo sie mit Hilfe von mechanischen, biologischen und/oder chemischen Mitteln bekämpft werden können.

Die Mischungen aus n-Buttersäure und Muscalure mit den Komponenten (a) und/oder (b) und/oder (c) können als solche oder in Mischung mit einem oder mehreren der üblichen Hilfs- und/oder Streckmitteln und/oder sonstigen Zusatzstoffen ("formulierte Lockmittel") verwendet werden. Geeignete Hilfs- und Streckmittel sind alle üblicherweise verwendbaren Mittel, die die Handhabung und/oder Verarbeitung der Lockmittel erleichtern. Die Lockmittel können auch in einer Form vorliegen, in der sie über einen längeren Zeitraum freigegeben werden ("slow-release"-Formulierungen). Hierzu können sie z.B. in Polymermaterial,
Paraffinen, Wachsen usw. eingearbeitet oder auch mikroverkapselt werden. Den erfindungsgemäß verwendbaren Lockmitteln als solchen oder als formulierten Lockmitteln können auch weitere Zusatzstoffe zugesetzt werden, die ihre Wirksamkeit verbessern können, die z.B. weitere die Insekten anlockende chemische Stoffe, z.B. Pheromone, anziehende Farbstoffe und Fraßstoffe, z.B. Zucker oder zuckerhaltige Fraßstoffe, wie Rohrzucker, Fruchtzucker, Invertzucker, Honig und Fruchtbestandteile. Solche "Köderzubereitungen" enthalten die erfindungsgemäßen Lockmittel eingearbeitet oder aber in unmittelbarer Nähe der Köder (z.B. oberhalb der Köder) angebracht. Diese Köderzubereitungen können auch entomopathogene Viren oder Mikroorganismen oder vorzugsweise insektizid wirkende Stoffe enthalten.

Vorzugsweise enthalten solche Köderzubereitungen je Köder von 0,5 bis 500 mg, besonders bevorzugt von 1 bis 300 mg und ganz besonders bevorzugt von 1,5 bis 100 mg an erfindungsgemäß verwendbaren Lockmitteln (n-Buttersäure und Muscalure mit wenigstens einer der Komponenten (a), (b), (c)).

Die erfindungsgemäß zu verwendenden Lockmittel können in Form der allgemein üblichen Formulierungen, wie als streufähige Puder, Stäube und Granulate, als gieß- oder spritzbare flüssige Formulierungen oder als feste oder flüssige Formulierungen, die mit Wasser verdünnt, durch Gießen oder Spritzen appliziert werden, vorliegen. Zur chemischen Insektenbekämpfung enthalten diese Formulierungen zweckmäßigerweise wenigstens einen insektizid wirkenden Stoff. Die Aufwandmengen an erfindungsgemäß verwendbaren Lockmitteln liegen vorzugsweise bei 0,05 bis 800, besonders bevorzugt 1 bis 500 und ganz besonders bevorzugt 2 bis 100 mg je m² zu behandelnder Fläche.

Als erfindungsgemäß verwendbare insektizide Stoffe können alle Stoffe verwendet werden, welche als Haushalts- und Hygienemittel sowie als Stallspritzmittel eingesetzt werden können, wobei bevorzugt die insektiziden Phosphorsäure-Derivate, Carbamate, natürliche und synthetischen Pyrethroide, Nitroimino-, Nitromethylen-, Cyanoimino- und Cyanomethylen-Derivate sowie die Pyrazolin- Derivate genannt seien. Besonders bevorzugt werden hierbei Insektizide, welche eine gute Wirksamkeit insbesondere gegen Insekten der Familie Muscidae, vorzugsweise Musca domestica aufweisen.

Als erfindungsgemäß besonders bevorzugte insektizide Stoffe seien aufgeführt:

### 1) Carbamidsäureester der Formel (I)

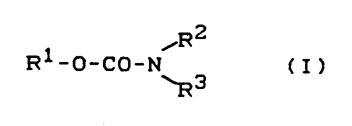

in welcher
- R¹: für einen gegebenenfalls substituierten carbocyclischen oder heterocyclischen aromatischen Rest oder für einen gegebenenfalls substituierten Oximrest steht (wobei die weiter unten erläuterten Reste R¹ bevorzugt werden),
- R²: für C₁-C₄-Alkyl steht und
- R³: für Wasserstoff, C₁-C₄-Alkyl oder für einen Rest U steht, wobei
- U: für den Rest -CO-R⁴ steht, worin
- R⁴: für Halogen, C₁-C₄-Alkyl, C₁-C₄-Alkoxy, C₃-C₅-Alkenoxy, C₃-C₅-Alkinoxy, C₁-C₄-Alkylthio, C₁-C₄-Alkyl-amino, Di-C₁-C₄-Alkylamino, C₁-C₄-Alkylhydroxylamino,
für gegebenenfalls durch Halogen, Nitro, Cyano, Trifluormethyl, C₁-C₄-Alkyl, C₁-C₄-Alkoxy, C₁-C₄-Alkylendioxy, C₁-C₄-Alkylthio, C₁-C₄-Alkoxy-carbonyl substituiertes Phenoxy, Phenylthio oder Phenylamino, für 2,3-Dihydro-2,2-dimethyl-7-benzofuranyl oder für den Rest 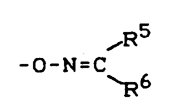 steht, worin
- R⁵: für Wasserstoff, C₁-C₄-Alkyl oder Di-C₁-C₄-alkylamino-carbonyl steht und
- R⁶: für C₁-C₄-Alkyl, C₁-C₄-Alkylthio, Cyano-C₁-C₄-alkylthio, C₁-C₄-Alkylthio-C₁-C₄-alkyl steht,
oder die beiden Reste R⁵ und R⁶ zusammen für gegebenenfalls durch Sauerstoff, Schwefel, SO oder SO₂ unterbrochenes C₂-C₈-Alkandiyl stehen, oder
in welcher
- U: für den Rest -S_{q}(O)ᵣ-R⁷ steht, worin
- q: für 1 oder 2 und
- r: für 0, 1 oder 2 stehen, wobei im Falle daß q für 2 steht, r 0 bedeutet und
- R⁷: für gegebenenfalls durch Halogen substituiertes C₁-C₄-Alkyl, C₃-C₅-Alkenyl, C₃-C₅-Alkinyl oder C₃-C₆-Cycloalkyl, für gegebenenfalls durch Halogen, Cyano, Nitro, Trifluormethyl, Trifluormethoxy, Trifluormethylthio, C₁-C₄-Alkyl oder C₁-C₄-Alkoxy substituiertes Phenyl, Benzyl oder Phenylethyl oder für den Rest 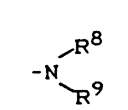 steht, worin
- R⁸: für C₁-C₄-Alkyl, C₃-C₅-Alkenyl, C₃-C₅-Alkinyl, C₃-C₆-Cycloalkyl oder Benzyl steht und
- R⁹: für C₁-C₄-Alkyl, C₃-C₅-Alkenyl, C₃-C₅-Alkinyl, C₃-C₆-Cycloalkyl, Benzyl, Phenylethyl, Halogen-carbonyl, Formyl, C₁-C₄-Alkyl-carbonyl, C₁-C₄-Alkoxy-carbonyl, C₁-C₄-Alkoxyphenoxy-carbonyl, C₃-C₅-Alkinoxy-carbonyl, C₃-C₅-Alkenoxycarbonyl, C₁-C₄-Alkylthiocarbonyl, C₁-C₄-Alkyl-amino-carbonyl, C₁-C₄-Alkyl-hyroxylamino-carbonyl, C₁-C₁₀-Alkyl-phenoxycarbonyl, Di-C₁-C₄-alkyl-aminocarbonyl, Phenylthiocarbonyl, Phenoxycarbonyl, 2,3-Dihydro-2,2-dimethyl-7-benzofuranyloxycarbonyl, für gegebenenfalls durch Halogen, Cyano, Nitro, Trifluormethyl, C₁-C₁₀-Alkyl oder C₁-C₄-Alkoxy substituietes Phenylsulfenyl, Phenylsulfinyl, Phenylsulfonyl oder Phenyl steht, oder für den Rest 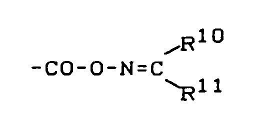
steht, worin
- R¹⁰: die oben für R⁵ angegebene Bedeutung und
- R¹¹: die oben für R⁶ angegebene Bedeutung hat, wobei ferner im Rest 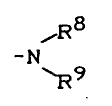
die Reste R⁸ und R⁹ zusammen für eine gegebenenfalls durch Sauerstoff oder Schwefel unterbrochene Kohlenwasserstoffkette mit 3 bis 8 Kohlenstoffatomen stehen und worin weiter R⁷ auch für den gleichen Rest stehen kann, an den der Rest -S_{q}(O)ᵣ-R⁷ gebunden ist.

Als Wirkstoffkomponenten ganz besonders bevorzugt sind Carbamidsäureester der Formel (I), in welcher
- R¹: für gegebenenfalls durch C₁-C₄-Alkyl, C₂-C₄-Alkenyl, C₁-C₄-Alkoxy, C₁-C₄-Alkoxy-methyl, C₁-C₄-Alkylthio, C₁-C₄-Alkylthio-methyl, C₁-C₄-Alkylamino, Di-(C₁-C₄-alkyl)-amino, Di-(C₃-C₄-alkenyl)amino, Halogen, Dioxolanyl, Methylendioxy und/oder durch den Rest -N=CH-N(CH₃)₂ substituierte Reste aus der Reihe Phenyl, Naphthyl, 2,3-Dihydro-7-benzofuranyl, Pyrazolyl oder Pyrimidinyl steht, oder in welcher
- R²: für einen Alkylidenaminorest der Formel 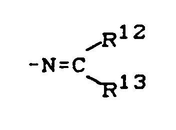
steht, in welcher
- R¹² und R¹³: die oben für R⁵ bzw. R⁶ angegebene Bedeutung haben,
- R²: für C₁-₄-Alkyl steht und
- R³: für Wasserstoff oder C₁-C₄-Alkyl (vorzugsweise für Wasserstoff) steht,

Als Beispiele für die Carbamidsäureester der Formel (I) seien die folgenden N-Methylcarbamidsäureester genannt: 2-Methyl-phenyl-, 2-Ethyl-phenyl-, 2-iso-Propyl-phenyl, 2-sec.-Butyl-phenyl, 2-Methoxy-phenyl-, 2-Ethoxy-phenyl-, 2-iso-Propoxy-phenyl-, 4-Methyl-phenyl-, 4-Ethyl-phenyl-, 4-n-Propyl-phenyl-, 4-Methoxy-phenyl-, 4-Ethoxy-phenyl-, 4-n-Propoxy-phenyl-, 3,4,5-Trimethyl-phenyl-, 3,5-Dimethyl-4-methylthio-phenyl-, 3-Methyl-4-dimethylaminophenyl-, 2-Ethylthiomethyl-phenyl-, 1-Naphthyl-, 2,3-Dihydro-2,2-dimethyl-7-benzofuranyl, 2,3-(Dimethyl-methylendioxy)-phenyl-, 2-(4,5-Dimethyl-1,3-dioxolan-1-yl)-phenyl-, 1-Methylthio-ethylidenamino-, 2-Methylthio-2-methylpropylidenamino-, 1-(2-Cyano-ethylthio)-ethylidenamino- und 1-Methylthiomethyl-2,2-dimethylpropylidenamino-N-methyl-carbamidsäureester, wobei das 2-iso-Propoxy-phenyl-N-methylcarbamat bevorzugt wird.

### 2) Carbonsäureester der Formel (II)

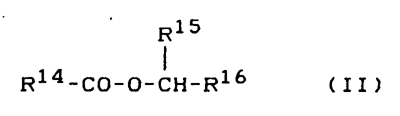

in welcher
- R¹⁴: für einen offenkettigen oder cyclischen Alkylrest steht, der gegebenenfalls substituiert ist durch Halogen, Alkyl, Cycloalkyl, durch gegebenenfalls durch Halogen, Alkyl und/oder Alkoxy substituiertes Alkenyl, durch Phenyl oder Styryl, welche gegebenenfalls durch Halogen, gegebenenfalls Halogensubstituierte Reste aus der Reihe Alkyl, Alkoxy, Alkylendioxy und/oder Alkylthio substituiert sind, durch spirocyclisch verknüpftes, gegebenenfalls Halogen-substituiertes Cycloalk(en)yl, welches gegebenenfalls benzannelliert ist, in welcher weiter
- R¹⁵: für Wasserstoff, Alkyl, Halogenalkyl, Alkenyl, Alkinyl oder Cyano steht, und
- R¹⁶: für einen gegebenenfalls substituierten Alkyl- oder Arylrest oder für einen Heterocyclus steht, oder zusammen mit R¹⁵ und dem Kohlenstoffatom, an das beide Reste gebunden sind, einen Cyclopentenonring bildet.

Ganz besonders als Wirkstoffkomponenten bevorzugt sind Carbonsäureester der Formel (II), in welcher
- R¹⁴: (a) für den Rest 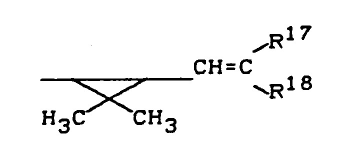
steht, worin
- R¹⁷: für Wasserstoff, Methyl, Fluor, Chlor oder Brom und
- R¹⁸: für Methyl, Fluor, Chlor, Brom, C₁-C₂-Fluoralkyl oder C₁-C₂-Chlorfluoralkyl oder für gegebenenfalls durch Halogen und/oder gegebenenfalls Halogen-substituierte Reste der Reihe C₁-C₄-Alkyl, C₁-C₄-Alkoxy, C₁-C₄-Alkylthio und/oder C₁-C₂-Alkylendioxy substituiertes Phenyl steht, oder worin beide Reste R¹⁷ und R¹⁸ für C₂-C₅-Alkandiyl (Alkylen) stehen;
oder in welcher
- R¹⁴: (b) für den Rest 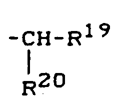
steht, worin
- R¹⁹: für gegebenenfalls durch Halogen und/oder durch gegebenenfalls Halogen-substituierte Reste der Reihe C₁-C₄-Alkyl, C₁-C₄-Alkoxy, C₁-C₄-Alkylthio oder C₁-C₂-Alkylendioxy substituiertes Phenyl steht und
- R²⁰: für Isopropyl oder Cyclopropyl steht;
oder in welcher
- R¹⁴: (c) für Methyl oder einen der Reste 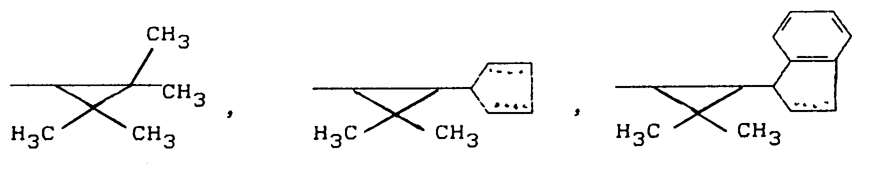 wobei die gepunkteten Linien mögliche Doppelbindungen andeuten sollen, steht,
und in welcher
- R¹⁵: für Wasserstoff, C₁-C₄-Alkyl, C₁-C₄-Halogenalkyl, Cyano oder Ethinyl steht und
- R¹⁶: für Reste der Reihe Phenyl, Furyl oder Tetrahydrophthalimido steht, wobei diese Reste substituiert sein können durch Halogen und/oder Reste der Reihe C₁-C₄-Alkyl, C₂-C₄-Alkenyl, C₁-C₄-Alkoxy, C₂-C₄-Alkenoxy, C₁-C₄-Alkylthio, C₁-C₂-Alkylendioxy, Phenoxy und/oder Benzyl, welche ihrerseits durch Halogen substituiert sein können und wobei R¹⁶ vorzugsweise für Tetrafluorphenyl, 3,4-Dichlorphenyl, Tetrahydrophthalimido oder für Phenoxyphenyl, steht, welches in einem oder beiden Phenylringen durch Halogen (vorzugsweise Fluor) substituiert sein kann.

Weiter sind die natürlich vorkommenden Pyrethroide (wie Pyrethrum) als Garbonsäureester der Formel (II) besonders bevorzugt.

Als Beispiele für erfindungsgemäß besonders bevorzugte Carbonsäureester der Formel (II) seinen genannt
2,2-Dimethyl-3-(2-methyl-propen-1-yl)-cyclopropan-carbonsäure-(3,4,5,6-tetrahydro-phthalimido-methyl)-ester, 2,2-Dimethyl-3-(2,2-dichlorvinyl)-cyclopropan-carbonsäure-(3-phenoxy-benzyl)-ester, 2,2-Dimethyl-3-(2,2-dichlorvinyl)-cyclopropancarbonsäure-(α-cyano-3-phenoxybenzyl)-ester, 2,2-Dimethyl-3-(2,2-dichlorvinyl)-cyclopropan-carbonsäure-(α-cyano-4-fluor-3-phenoxy-benzyl)ester, 2,2-Dimethyl-3-(2,2-dichlorvinyl)-cyclopropancarbonsäure-(2,3,5,6-tetrafluor-benzyl)-ester, 2,2-Dimethyl-3-(2,2-dibromvinyl)-cyclopropancarbonsäure-(α-cyano-3-phenoxy-benzyl)-ester und 3-Methyl-2-(4-chlorphenyl)-butansäure-(α-cyano-3-phenoxy-benzyl)-ester.

### 3) Phosphorsäure- und Phosphonsäureester der allgemeinen Formel (III)

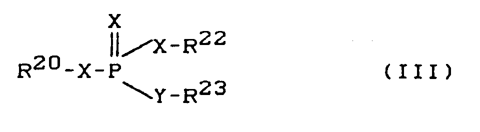

in welcher
- X: gleich oder verschieden ist und für O oder S steht und
- Y: für O, S, -NH- oder für eine direkte Bindung zwischen dem zentralen P-Atom und R²³ steht und
- R²¹ und R²²: gleich oder verschieden sind und für gegebenenfalls substituiertes Alkyl oder Aryl stehen,
- R²³: für Wasserstoff, gegebenenfalls substituiertes Alkyl, Aryl, Heteroaryl, Aralkyl, Alkenyl, Dioxanyl oder einen Oximrest oder für den gleichen Rest steht, an den es gebunden ist.

Besonders bevorzugt sind Phosphorsäure- und Phosphonsäureester der Formel (III), in welcher
- R²¹ und R²²: gleich oder verschieden sind und für C₁-C₄-Alkyl oder Phenyl stehen,
- R²³: für Wasserstoff, Alkyl mit 1 bis 4 Kohlenstoffatomen steht, das gegebenenfalls durch Halogen, Hydroxyl, Cyano, gegebenenfalls Halogen-substituiertes Phenyl, Carbamoyl, Alkylsulfonyl, Alkylsulfinyl, Alkylcarbonyl, Alkoxy, Alkylthio, Alkoxycarbonyl, Alkylaminocarbonyl, letztere mit jeweils bis zu 6 Kohlenstoffatomen, substituiert ist, für Alkenyl mit bis zu 4 Kohlenstoffatomen, das gegebenenfalls durch Halogen-substituiertes Phenyl oder C₁-C₄-Alkoxycarbonyl substituiert ist, oder für den Rest der allgemeinen Formel 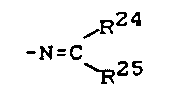 wobei R²⁴ und R²⁵ die oben für R⁵ bzw. R⁶ angegebene Bedeutung besitzen, oder für Cyano oder Phenyl stehen, und in welcher
- R²³: ferner für Dioxanyl, das durch denselben Rest substituiert ist, an den R²² gebunden ist, oder R²³ für den gleichen Rest an den es gebunden ist steht, oder R²³ für Phenyl, das gegebenenfalls durch Methyl, Nitro, Cyano, Halogen und/oder Methylthio substituiert ist steht, wobei
- R²³: außerdem besonders bevorzugt für gegebenenfalls durch C₁-C₄-Alkoxy, C₁-C₄-Alkylthiomethyl, C₁-C₄-Alkyl und/oder durch Halogen substituierte heteroaromatische Reste, wie Pyridinyl, Chinolinyl, Chinoxalinyl, Pyrimidinyl oder Benzo-1,2,4-triazinyl steht.

Im einzelnen seien genannt:
O,O-Dimethyl- bzw. O,O-Diethyl-O-(2,2-dichlor- bzw. 2,2-dibromvinyl)-phosphorsäureester,
O,O-Diethyl-O-(4-nitro-phenyl)-thionophosphorsäureester,
O,O-Dimethyl-O-(3-methyl-4-methylthio-phenyl)-thionophosphorsäureester,
O,O-Dimethyl-O-(3-methyl-4-nitro-phenyl)-thionophosphorsäureester,
O-Ethyl-S-n-propyl-O-(2,4-dichlorphenyl)-thionophosphorsäureester,
O-Ethyl-S-n-propyl-O-(4-methylthio-phenyl)-thionophosphorsäureester,
O,O-Dimethyl-S-(4-oxo-1,2,3-benzotriazin(3)yl-methyl)thionothiolphosphorsäureester,
O-methyl-O-(2-iso-propyl-6-methoxy-pyrimidin(4)yl)thionomethanphosphonsäureester,
O,O-Diethyl-O-(2-iso-propyl-6-methyl-pyrimidin(4)yl)thionophosphorsäureester,
O,O-Diethyl-O-(3-chlor-4-methyl-cumarin(7)yl)-thionophosphorsäureester,
O,O-Dimethyl-2,2,2-trichlor-1-hydroxy-ethan-phosphonsäureester,
O,O-Dimethyl-S-(methylaminocarbonyl-methyl)-thionophosphonsäureester,
O-Methyl-O-(6-methoxy-2-tert.-butyl-pyrimidin-4-yl)thionoethan-phosphorsäure-diester.

### 4) Nitromethylen-, Nitroimino-, Cyanoimino- oder Cyanmethylen-Derivate der Formel IV

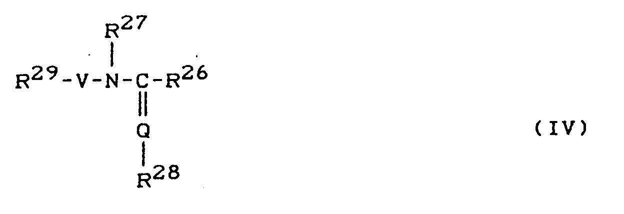

in welcher
- R²⁶: für C₁-C₄-Alkyl (vorzugsweise für Methyl oder Ethyl) oder für die Gruppe 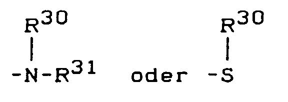 steht, in welcher
- R³⁰: C₁-C₄-Alkyl (vorzugsweise Methyl oder Ethyl) bedeutet oder
- R³⁰: gemeinsam mit R²⁷ eine gegebenenfalls verzweigte C₂-C₅-Alkandiyl-Kette (vorzugsweise -(CH₂)₂- oder -(CH₂)₃-) darstellt,
und
- R³¹: Wasserstoff oder C₁-C₄-Alkyl (vorzugsweise Wasserstoff) bedeutet,
- R²⁷: für C₁-C₄-Alkyl (vorzugsweie Methyl oder Ethyl) steht oder gemeinsam mit R³⁰ eine gegebenenfalls verzweigte C₂-C₅-Alkandiyl-Kette (vorzugsweise -(CH₂)₂- oder -(CH₂)₃-) darstellt,
- R²⁸: für NO₂ oder CN steht,
- R²⁹: für einen gegebenenfalls substituierten (vorzugsweise durch Halogen und/oder C₁-C₄-Alkyl substituierten) heteroaromatischen Rest (vorzugsweise Pyridylrest) steht (wobei R²⁹ besonders beovorzugt für die 2-Chlorpyridyl-5- und 2-Chlorthiazolyl-5-Gruppe steht),
- Q: für =C- oder =N- steht, und
- V: für eine direkte Bindung oder für einen C₁-C₃-Alkandiyl-Rest (vorzugsweise für -CH₂-) steht.

Im folgenden werden beispielhaft einige besonders bevorzugte Verbindungen der Formel XIV speziell aufgeführt: 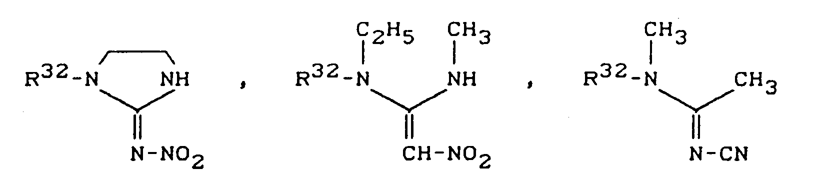 wobei
R³² den 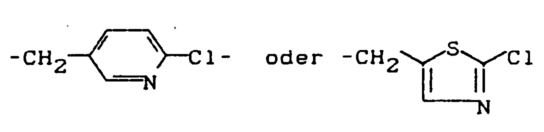 Rest
bedeutet.

Die erfindungsgemäß verwendbaren Lockmittel und/oder die insektiziden Stoffe sowie die Mischungen der erfindungsgemäß verwendbaren Lockmittel mit den insektziden Stoffen können in Abhängigkeit von ihren jeweiligen physikalischen und/oder chemischen Eigenschaften in übliche Formulierungen übergeführt weden, wie Lösungen, Emulsionen, Suspensionen, Pulver, Schäume, Pasten, Granulate, Aerosole, mit Wirkstoffimprägnierte natürliche und synthetische Stoffe sowie Feinstverkapselungen in polymeren Stoffen,

Diese Formulierungen werden in bekannter Weise hergestellt, z.B. durch Vermischen mit Hilfs- und/oder Streckmitteln, also flüssigen Lösungsmitteln, und/oder festen Trägerstoffen gegebenenfalls unter Verwendung von oberflächenaktiven Mitteln, also Emulgiermitteln und/oder Dispergiermitteln und/oder schaumerzeugenden Mitteln, Im Falle der Benutzung von Wasser als Streckmittel können z.B. auch organische Lösungsmittel als Hilfslösungsmittel verwendet werden, Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formkörper enthalten vorzugsweise 0,001 bis 95, insbesondere 0,01 bis 70 Gewichtsprozente an erfindungsgemäß verwendbaren Lockmitteln.

Die Formulierungen der insektiziden Stoffe enthalten (gegebenenfalls neben erfindungsgemäß verwendbaren Lockmitteln) vorzugsweise zwischen 0,1 und 95, insbesondere 0,5 bis 90 Gewichtsprozente insektizide Stoffe.

Die oben beschriebenen Köderzubereitungen sowie die biologischen und/oder chemischen Insektenbekämpfungsmittel, welche neben wenigstens einem entomopathogenen oder entomotoxischen Virus oder Mikroorganismus und/oder (vorzugsweise) wenistens einen insektizid wirkenden Stoff und gegebenenfalls einen oder mehrere Hilfs- und/oder Streckmittel und gegebenenfalls einen oder mehrere Zusatzstoffe neben einer Mischung von n-Buttersäure und Muscalure mit den Komponenten (a) und/oder (b) und/oder (c) enthalten, sind ebenfalls Teil der vorliegenden Erfindung.

Die vorliegende Erfindung betrifft auch mechanische Insektenbekämpfungsvorrichtungen und Mittel, welche eine Mischung aus n-Buttersäure und Muscalure mit wenigstens einen der oben unter (a) bis (c) aufgeführten Stoffe enthalten.

Bei den mechanischen oder physikalischen Insektenbekämpfungsvorrichtungen und Mittel handelt es sich im wesentlichen um die üblichen Insektenfallen sowie um Vorrichtungen und Mittel mit klebriger Oberfläche, an der die Insekten haften bleiben. In Insektenfallen können die Insekten durch eine geschickte Anordnung (z.B. Trichterform als Verschluß) mechanisch am Verlassen der Fallen gehindert werden oder aber durch Elektrizität oder durch insektizid wirkende Stoffe abgetötet werden.

In diesen Fallen kann die ganze Oberfläche oder aber auch nur ein bestimmter Teil der Oberfläche mit den erfindungsgemäßen Lockmittel versehen werden oder die Lockmittel befinden sich außerhalb der Falle auf einer geeigneten Vorrichtung (z.B. Pappe).

Diese können auch in Form von Köderzubereitungen, die gegebenenfalls auch insektizide Stoffe enthalten, oder ohne Köderstoffe in geeigneten Formulierungen in Mischung mit insektiziden Stoffen in den Fallen enthalten sein.
In einer besonders bevorzugten Ausführungsform der vorliegenden Erfindung handelt es sich um eine Köderfalle, wie sie in der EP-A- 0 446 464 beschrieben wird. Diese Falle besteht aus einem Hohlkörper (vorzugsweise in eckiger Form und vorzugsweise oben offen), der (vorzugsweise an der Innenseite) eine Insekten anlockende Farbe trägt, wobei die Lockfarbe eine Rottönung mit im CielabSystem (nach DIN 6174) gemessenen Farbwerten mit den Werten L* = 36 bis 45, a* = 20 bis 55 und b* = 0 bis 25 aufweist. Vorzugsweise auf der Innenseite kann die Falle zusätzlich schwarze Streifen aufweisen. Das erfindungsgemäße Lockmittel wird vorzugsweise zusammen mit Fraßstoffen und wenigstens einem insektiziden Wirkstoff auf der Innenseite der Falle (vorzugsweise auf den gegebe nenfalls vorhandenen scharzen Streifen) aufgebracht. Anstelle von insektiziden Wirkstoffen oder zusätzlich zu diesen kann die Innenseite der Falle auch mit einer klebrigen Oberfläche versehen werden, die die Insekten festhält.

Bei den Vorrichtungen und Mitteln mit klebriger Oberfläche handelt es sich vorzugsweise um Folien oder Papiere mit einer klebrigen Oberfläche, an der die Insekten haften bleiben Diese Folien können in Räumen (z.B. als Spirale) aufgehängt oder aufgestellt werden. Es ist auch möglich, klebrige Formulierungen auf glatte Oberflächen (z.B. Fliesen) durch Aufstreichen oder Aufspritzen auszubringen, z.B. in Lebenmittel-verarbeitenden Betrieben oder Tierställen. Bei diesen Vorrichtungen und Mitteln kann das erfindungsgemäße Lockmittel gegebenenfalls zusammen mit weiteren Insekten-anlockenden Mitteln in der klebrigen Oberfläche enthalten sein oder in deren unmittelbaren Nähe vorliegen.

Bei den Insekten, welche durch die erfindungsgemäß verwendbaren Lockmittel angezogen werden, handelt es sich um solche der Familie Muscidae, welche als Schädlinge oder Lästlinge insbesondere im häuslichen Bereich, in Krankenhäusern, in der Lebensmittelindustrie und der Tierhaltung vorkommen, wobei Musca domestica gant besonders hervorgehoben sei.

## Patentansprüche

1. Verwendung von Mischungen von n-Buttersäure mit Muscalure und wenigstens einem der folgenden Stoffe:
(a) Diacetyl und/oder
(b) Laurinsäure und/oder
(c) Caprylsäure
als Lockmittel bei der Bekämpfung von Muscidae.

2. Verwendung gemäß Anspruch 1 bei der Bekämpfung von Muscidae mit mechanischen oder physikalischen Insektenbekämpfungsvorrichtungen und Mittel, mit biologischen oder chemischen Insektenbekämpfungsmittel sowie mit Kombinationen solcher Vorrichtungen und Mittel.

3. Biologische und chemische Insektenbekämpfungsmittel, welche neben wenigstens einem entomopathogenen oder entomotoxischen Virus oder Mikroorganismus und/oder neben wenigstens einem insektizid wirkenden Stoff und gegebenenfalls einen oder mehreren Hilfs- und/oder Streckmitteln und/oder sonstigen Zusatzstoffen zusätzlich eine Mischung von n-Buttersäure mit Muscalure und wenigstens einem der folgenden Stoffe:
(a) Diacetyl und/oder
(b) Laurinsäure und/oder
(c) Caprylsäure
als Lockmittel enthalten.

4. Insektenbekämpfungsmittel gemäß Anspruch 3, welche in Form von Köderformulierungen vorliegen.

5. Mechanische oder physikalische Insektenbekämpfungsvorrichtungen und Mittel, welche eine Mischung von n-Buttersäure mit Muscalure und wenigstens einem der folgenden Stoffe
(a) Diacetyl und/oder
(b) Laurinsäure und/oder
(c) Caprylsäure
als Lockmittel enthalten.

6. Insektenbekämpfungsvorrichtungen und Mittel gemäß Anspruch 5, welche Insektenbekämpfungsmittel gemäß den Ansprüchen 3 oder 4 enthalten.

7. Insektenbekämpfungsvorrichtungen und Mittel gemäß den Ansprüchen 5 oder 6, welche eine klebrige Oberfläche aufweisen, an der die Insekten haften bleiben, wobei die Mischungen von n-Buttersäure und Muscalure mit wenigstens einer der Komponenten (a) und/oder (b) und/oder (c) in der klebrigen Oberfläche oder in unmittelbarer Nähe der klebrigen Oberfläche vorliegen.

8. Mittel zum Anlocken von Muscidae, dadurch gekennzeichnet, daß diese Mischungen von n-Buttersäure und Muscalure mit den folgenden Stoffen:
(a) Diacetyl und/oder
(b) Laurinsäure und/oder
(c) Caprylsäure
enthalten.

## Claims

1. Use of mixtures of n-butyric acid with muscalure and at least one of the following substances:
(a) diacetyl and/or
(b) lauric acid and/or
(c) caprylic acid
as attractant for combating Muscidae.

2. Use according to Claim 1 for combating Muscidae using mechanical or physical devices and means for combating insects, using biological or chemical agents for combating insects, as well as combinations of such devices and agents.

3. Biological and chemical agents for combating insects which additionally contain, besides one entomopathogenic or entomotoxic virus or microorganism and/or besides at least one insecticidally active substance and, if appropriate, one or more auxiliaries and/or extenders and/or other additives, a mixture of n-butyric acid with muscalure and at least one of the following substances:
(a) diacetyl and/or
(b) lauric acid and/or
(c) caprylic acid
as attractant.

4. Agents for combating insects according to Claim 3 in the form of bait formulations.

5. Mechanical or physical devices and means for combating insects which contain a mixture of n-butyric acid with muscalure and at least one of the following substances
(a) diacetyl and/or
(b) lauric acid and/or
(c) caprylic acid
as attractant.

6. Devices and means for combating insects according to Claim 5, which contain agents for combating insects according to Claims 3 or 4.

7. Devices and means for combating insects according to Claims 5 or 6, which have a tacky surface to which the insects adhere, the mixtures of n-butyric acid and muscalure with at least one of the components (a) and/or (b) and/or (c) being incorporated into the tacky surface or existing in the immediate vicinity of the tacky surface.

8. Means for attracting Muscidae, characterized in that these contain mixtures of n-butyric acid and muscalure with the following substances:
(a) diacetyl and/or
(b) lauric acid and/or
(c) caprylic acid.

## Revendications

1. Utilisation de mélanges d'acide n-butyrique avec du muscalure et au moins l'une des substances suivantes :
(a) diacétyle et/ou
(b) acide laurique et/ou
(c) acide caprylique
comme attractif dans la lutte contre des Muscidae.

2. Utilisation suivant la revendication 1 dans la lutte contre des Muscidae avec des dispositifs et des moyens mécaniques ou physiques pour combattre des insectes, avec des moyens biologiques ou chimiques pour combattre des insectes ainsi qu'avec des associations de ces dispositifs et moyens.

3. Moyens biologiques et chimiques de lutte contre des insectes, qui contiennent additionnellement comme attractif, à côté d'au moins un virus ou micro-organisme entomopathogène ou entomotoxique et/ou à côté d'au moins une substance à action insecticide et, le cas échéant, d'un ou plusieurs agents auxiliaires et/ou diluants et/ou d'autres additifs, un mélange d'acide n-butyrique avec du muscalure et au moins l'une des substances suivantes :
(a) diacétyle et/ou
(b) acide laurique et/ou
(c) acide caprylique.

4. Moyens de lutte contre des insectes suivant la revendication 3, qui se présentent sous forme d'une formulation d'appât.

5. Dispositifs et moyens mécaniques ou physiques de lutte contre des insectes, qui contiennent comme attractif un mélange d'acide n-butyrique avec du muscalure et au moins l'une des substances suivantes :
(a) diacétyle et/ou
(b) acide laurique et/ou
(c) acide caprylique.

6. Dispositifs et moyens de lutte contre des insectes suivant la revendication 5, qui contiennent des moyens de lutte contre les insectes suivant les revendications 3 ou 4.

7. Dispositifs et moyens de lutte contre les insectes suivant les revendications 5 ou 6, qui présentent une surface collante à laquelle les insectes restent collés, les mélanges d'acide n-butyrique et de muscalure avec au moins l'un des composants (a) et/ou (b) et/ou (c) étant présents au niveau de la surface collante ou au voisinage immédiat de la surface collante.

8. Moyens exerçant un effet attractif sur des Muscidae, caractérisés en ce qu'ils contiennent des mélanges d'acide n-butyrique et de muscalure avec les substances suivantes :
(a) diacétyle et/ou
(b) acide laurique et/ou
(c) acide caprylique.
